(19) Europäisches Patentamt
European Patent Office
Office européen des brevets

(11) **EP 1 481 109 B1**

(12) **EUROPÄISCHE PATENTSCHRIFT**

(45) Veröffentlichungstag und Bekanntmachung des Hinweises auf die Patenterteilung:
**26.10.2005 Patentblatt 2005/43**

(51) Int Cl.$^7$: **C22C 38/18**, C22C 38/20, C22C 38/22, B60S 1/32, C21D 9/02

(21) Anmeldenummer: 03793733.1

(22) Anmeldetag: **12.08.2003**

(86) Internationale Anmeldenummer:
**PCT/EP2003/008988**

(87) Internationale Veröffentlichungsnummer:
**WO 2004/022810 (18.03.2004 Gazette 2004/12)**

(54) **VERWENDUNG EINES CHROM-STAHLS ALS WERKSTOFF FÜR KORROSIONSBESTÄNDIGE FEDERELEMENTE UND DESSEN HERSTELLUNG**

USE OF CHROME STEEL AS RAW MATERIAL FOR CORROSION-RESISTANT SPRING ELEMENTS AND METHOD FOR PRODUCING SAID CHROME STEEL

UTILISATION D'ACIER CHROME COMME MATIERE PREMIERE POUR ELEMENTS RESSORTS RESISTANTS A LA CORROSION ET PRODUCTION DUDIT ACIER CHROME

(84) Benannte Vertragsstaaten:
**BE DE ES FR GB**
Benannte Erstreckungsstaaten:
**AL LT LV MK**

(30) Priorität: **16.08.2002 DE 10237446**

(43) Veröffentlichungstag der Anmeldung:
**01.12.2004 Patentblatt 2004/49**

(73) Patentinhaber: **Stahlwerk Ergste Westig GmbH**
**58239 Schwerte (DE)**

(72) Erfinder:
• **PACHER, Oskar**
  **A-8041 Graz (AT)**
• **KLOSS-ULITZKA, Gisbert**
  **58809 Neuenrade (DE)**

(74) Vertreter: **König, Gregor Sebastian et al**
**König-Szynka-von Renesse**
**Patentanwälte**
**Lohengrinstrasse 11**
**40549 Düsseldorf (DE)**

(56) Entgegenhaltungen:
EP-A- 1 106 705          WO-A-96/11483
US-A- 4 022 640          US-A- 4 594 115

## Beschreibung

Die Erfindung bezieht sich auf die Verwendung eines Chrom-Stahls mit 0,03 bis 0,1% Kohlenstoff, 0,2 bis 0,9% Silizium, 0,3 bis 1% Mangan, 13 bis 20% Chrom, unter 0,5% Nickel, 0,1 bis 1,5 % Molybdän, 0,1 bis 0,5% Kupfer, 0,03 bis 0,05% Stickstoff, unter 10 ppm. Bor, unter 0,01% Titan, 0,01 bis 0,10% Niob, 0,02 bis 0,25% Vanadium und vorzugsweise unter 0,002% Aluminium, Rest Eisen.

Chrom-Stähle mit ferritischem oder je nach ihrem Nickelgehalt ferritischaustenitischem Gefüge besitzen eine hohe Korrosionsbeständigkeit und sind in großer Zahl bekannt.

So beschreibt beispielsweise die europäische Offenlegungsschrift 1 099 773 A1 einen ferritischen Chrom-Stahl mit 0,02 bis 0,06% Kohlenstoff, bis 1% Silizium, bis 1% Mangan, 11 bis 30% Chrom, bis 0,7% Nickel, bis 0,05% Phosphor, bis 0,01% Schwefel, bis 0,005% Aluminium, dessen Gehalte an Stickstoff, Vanadium und Kohlenstoff in bestimmter Weise aufeinander abgestellt sind. Dieser Stahl ist sehr weich und eignet sich daher als Werkstoff für rostfreie Tiefziehbleche mit geringer Anisotropie.

Des weiteren beschreibt die europäische Offenlegungsschrift 1 113 084 A1 einen ferritischen Chrom-Stahl mit bis 0,1 % Kohlenstoff, bis je 1,5% Silizium und Mangan, 5 bis 50% Chrom, bis 2% Nickel, bis 2,5% Molybdän, bis 2,5% Kupfer, bis 0,1% Stickstoff, bis 0,05% Bor, bis 0,5% Titan, bis 0,5% Niob, bis 0,3% Vanadium, bis 0,08% Phosphor, bis 0,02% Schwefel, bis 0,2% Aluminium , bis 0,3% Zirkonium und bis 2,0% Wolfram. Der Stahl ist sehr weich und eignet sich wegen seiner guten Verformbarkeit ebenfalls als Werkstoff für Tiefziehbleche mit einer bestimmten Kristallorientierung im Anschluß an eine Walzverformung und ein abschließendes Glühen bei 800 bis 1100° C.

US-A-4 022 640 offenbart einen Stahl bestehend aus 11 bis 30 Cr, bis 0.1 C, bis 1 Mn, und mit weiteren Wahlelementen aus der Gruppe Mo, Al, Ti und Nb.

Schließlich beschreibt die US-Patentschrift 5 178 693 einen ferritischaustenitischen Chrom-Stahl mit 0,01 bis 0,15% Kohlenstoff, bis 1,39% Silizium, 0,1 bis 4,0% Mangan, 10 bis 20% Chrom, bis 2,5% Molybdän, 0,1 bis 4,0% Kupfer, bis 0,032% Stickstoff, bis 0,0050% Bor, bis 0,02% Vandium und bis 0,20% Aluminium. Dieser Stahl eignet sich zum Herstellen von dünnem Band, aus dem sich nach einem abschließenden Durchlaufglühen bei 300 bis 650°C durch Ausstanzen oder -schneiden Blattfedern herstellen lassen. Es hat sich jedoch herausgestellt, daß das Band nach dem Schlußglühen bei der angegebenen Temperatur und dem Abkühlen auf Raumtemperatur hohe Eigenspannungen aufweist, die je nach ihrer Stärke beim Ausstanzen zu einem Verziehen der Stanzteile führt. Dies ist bei Federelementen, insbesondere bei Lamellenfedem ein erheblicher Nachteil, weil sie dann noch gerichtet und zur abschließenden Formgebung gebogen werden müssen. Bei höheren inneren Spannungen bzw. Eigenspannungen kann es zudem zu einer Verringerung der Dauerfestigkeit kommen.

Werkstoffe für Federelemente erfordern eine hohe lineare Federrate, die nach der Formel

$$R = \delta F/\delta s$$

aus der Steigung einer Kraft/Auslenkungs-Geraden ermittelt wird, wobei F die Kraft und s die Auslenkung ist. Des weiteren ist bei Federelementen die zulässige Feder-Grenzspannung kennzeichnend, die gemäß DIN 2088 und DIN 2089 aus der Zugfestigkeit $R_m$ multipliziert mit einer Konstanten errechnet wird. Diese Konstante liegt je nach der Federgeometrie und Anwendung im Einzelfall bei 0,4 bis 0,7.

Kohlenstoffstähle mit Kohlenstoffgehalten bis 1% besitzen nach einer Wärmebehandlung zwar hohe $R_m$-Werte und erlauben daher auch hohe Grenzspannungen; ihre Korrosions-, insbesondere Rostbeständigkeit ist jedoch gering. Dieser Nachteil ist gravierend, weil Federelemente zumeist feuchter Luft ausgesetzt sind und in großem Umfange auch in der chemischen Industrie zur Verwendung kommen. Besser geeignet sind daher austenitische Stähle wegen ihrer hohen Korrosionsbeständigkeit. Diese erfordern jedoch einen verhältnismäßig hohen Anteil teurer Legierungselemente wie insbesondere Nickel. Das gilt auch für ausscheidungshärtbare austenitische Stähle, die zur Verbesserung ihrer Festigkeit Aluminium, Titan oder Niob enthalten.

Außerdem kommen nickelhaltige Stähle für Gegenstände, die mit der menschlichen Haut in Berührung kommen, beispielsweise Schmuck, aus gesundheitlichen Gründen nicht in Frage.

Preislich günstiger sind martensitische Chrom-Stähle, die jedoch mit dem Nachteil einer schlechteren Kaltverformbarkeit behaftet sind und sich daher nur im geglühten Zustand zu Federelementen verarbeiten lassen. Die daraus hergestellten Federn erfordern ein Glühen bzw. Härten bei hohen Temperaturen sowie ein anschließendes Anlassen. Das Härten der Einzelteile ist mit hohen Kosten verbunden und erfordert aus Gründen der Qualität zur Endkontrolle eine Härteprüfung, so daß der Kostenvorteil aus dem Wegfall teurer Legierungselemente wieder verloren geht. Außerdem besteht bei den martensitischen Chrom-Stählen die Gefahr, daß sich im Gefüge Inseln und Nester aus Chromkarbiden bilden, die zu einer Beeinträchtigung der Korrosionsbeständigkeit führen.

Auch mit Hilfe einer Beschichtung läßt sich keine durchgreifende, vor allem längerfristige Verbesserung der Korrosionsbeständigkeit erreichen, weil solche Beschichtungen eine sehr geringe Dicke besitzen müssen und durch Verschleiß oder Beschädigungen ihre Schutzwirkung verlieren. Bei metallischen Beschichtungen können sich zudem an beschädigten Stellen Lokalelemente bilden, die zu einer verstärkten Korrosion führen. Die Gefahr ist bei Federelementen besonders groß, weil diese häufig mit Ausstanzungen und Punktschweißungen versehen oder zur Lagefixierung in metallischen Klemmführungen angeordnet sind.

Die Erfindung ist darauf gerichtet, die Federeigenschaften, gekennzeichnet durch die Zugfestigkeit und die Formgenauigkeit von Federelementen aus einem korrosionsbeständigen Stahl zu verbessern.

Um dies zu erreichen, schlägt die Erfindung die Verwendung eines ferritischen Chrom-Stahls mit 0,03 bis 0,1 % Kohlenstoff, 0,2 bis 0,9% Silizium, 0,3 bis 1 % Mangan, 13 bis 20% Chrom, unter 0,5% Nickel, 0,1 bis 1,5% Molybdän, 0,1 bis 05% Kupfer, 0,03 bis 0,05% Stickstoff, unter 10 ppm Bor, unter 0,01% Titan, 0,01 bis 0,10% Niob, 0,02 bis 0,25% Vanadium, Rest Eisen vor.

Besonders geeignet ist ein ferritischer Chrom-Stahl mit 0,03 bis 0,08% Kohlenstoff, 0,2 bis 0,9% Silizium, 0,4 bis 0,8% Mangan, 15 bis 18% Chrom, unter 0,2% Nickel, je 0,1 bis 0,5% Molybdän und Kupfer, 0,03 bis 0,05% Stickstoff, unter 8 ppm Bor, unter 0,005% Titan, 0,01 bis 0,05% Niob und 0,05 bis 0,20% Vanadium, Rest Eisen.

Die Erfindung vereinigt die hohe Korrosionsbeständigkeit der ferritischen Chrom-Stähle mit der hohen Zugfestigkeit höher legierter Federstähle; sie macht sich folgende Erkenntnisse zu Nutze:

Durch Absenken des Titangehaltes auf unter 0,005% können höhere Glühtemperaturen, insbesondere Glühtemperaturen von 1000 bis 1200°C zur Anwendung gelangen. Unter diesen Bedingungen entstehen keine Titankarbide und/oder Titankarbonitride als versprödend wirkende MX-Ausscheidungen. Sie würden sich vorzugsweise an den Korngrenzen ausbilden und dadurch ein nachfolgendes Kaltverformen erschweren bzw. verhindern.

Aufgrund der höheren Glühtemperatur läßt sich die Auflösung der Karbide und/oder Karbonitride soweit steigern, daß - wegen des Fehlens von Ausscheidungskeimen aus Titankarbid oder Titankarbonitrid - nach einem Abschrecken ein sehr hoher Anteil von Legierungselementen metastabil in Lösung bleibt. Dieser höhere Anteil an gelösten oder metastabil gelösten Elementen und/oder Ausscheidungen, dürfte für die ausgezeichnete Kaltverformbarkeit und für die erfindungsgemäß hohe Verfestigung des Stahl verantwortlich sein.

Durch die Begrenzung des Titangehaltes, bei gleichzeitigem Mikrolegieren mit den Elementen Vanadium und Niob, wird ferner besonders vorteilhaft verhindert, daß titanhaltige MX-Ausscheidungen als isomorphe Keime, das heißt Keime mit gleicher Gitterstruktur, für gemeinsame, kohärente Vanadium- und Niob-Ausscheidungen dienen. Da Vanadium bevorzugt als Nitrid, Niob hingegen vorzugsweise als 50:50-Karbonitrid ausgeschieden wird, ist die Wachstumskinetik dieser Ausscheidungen verschieden. Der Festigkeitsanstieg durch eine Wärmebehandlung bei Temperaturen von 100 bis 300°C ist auf das Wachsen von metastabilen Ausscheidungen zurückzuführen.

Zur Vermeidung schwerlöslicher Boride sollte der Gehalt an Bor unter 10 ppm, jener von Aluminium unter 0,002% liegen.

Der Stahl kann des weiteren noch unter 0,002% Aluminium enthalten.

Bei dem vorgeschlagenen Stahl sind die Gehalte an Kohlenstoff und Stickstoff und/ oder Niob, Vanadium und Titan vorzugsweise wie folgt aufeinander abgestimmt:

$$(\%C) / (\%N) = 0{,}8 \text{ bis } 2{,}0$$

$$[(\%Nb) + (\%V)] / 10 \,(\%Ti) = 5 \text{ bis } 17.$$

Der erfindungsgemäße Stahl zeichnet sich durch eine außergewöhnlich hohe Zugfestigkeit, eine hervorragende Kaltverformbarkeit und hohe Korrosionsbeständigkeit aus; er besitzt ein sehr feinkörniges Gefüge und erlaubt hohe Temperaturen bei einem Lösungsglühen ohne die Gefahr einer Korngrenzenversprödung durch Karbide und/ oder Karbonitride. Diese verbleiben nach einem solchen für ferritische Stähle atypischen Lösungsglühen vorzugsweise ein bis fünfzehn Minuten bei 1000 bis 1200°C, metastabil in fester Lösung und erlauben ein ggf. mehrstufiges Kaltverformen. Dem Kaltverformen schließt sich vorzugsweise ein zehn- bis fünfzehnmenütiges Schlußerwärmen bei 100 bis 400°C, vorzugsweise bei höchstens 300°C an.

Im einzelnen kann der erfindungsgemäße Chrom-Stahl in der Form von Runddraht mit einer Querschnittsabnahme bis 40%, vorzugsweise bis 35% kaltverformt werden und anschließend ein Lösungsglühen zur weitgehenden Beseitigung der karbidischen bzw. karbonitridischen Ausscheidungen mit anschließendem Abschrecken stattfinden. Im kaltverformten, lösungsgeglühten und abgeschreckten Zustand besitzt der Stahl bzw. Draht eine ausgezeichnete Kaltverformbarkeit, die sich noch durch eine weitere Kaltverformung mit Querschnittsabnahmen bis 65%, beispielsweise 50% verbessern läßt. Danach übersteigt die Festigkeit des Stahl bereits diejenige eines herkömmlichen kaltgewalzten Federbandstahls gemäß DIN 17 222 und DIN 17 224 mit $R_m$-Werten von 1150 bis 1500 N/mm$^2$ für die Stahlqualitäten Ck 55, Ck 67, Ck 101 und 50CrV4.

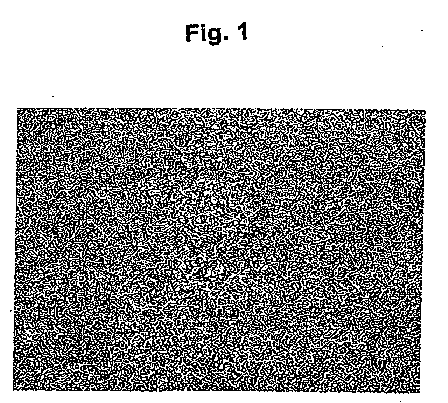

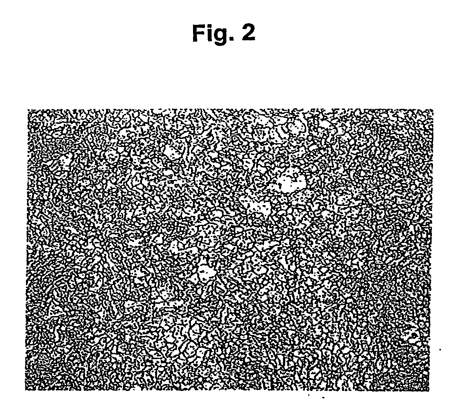

Das Gefüge des erfindungsgemäßen wärmebehandelten und kattverformten Stahls ist mit einer Korngröße unter 20 μm außerordentlich feinkörnig, wie sich aus der Gefügeaufnahme gemäß Fig. 2 im Vergleich mit dem auch schon feinkörnigen Ausgangsgefüge gemäß Fig. 1 ergibt. Die Gefügeaufnahme der Fig. 2 läßt erkennen, daß das Gefüge ferritisch ist, jedoch in geringer Menge Umwandlungsgefüge-Bestandteile (dunkle Stellen) enthält, bei denen es sich um Martensit handeln dürfte, der sich in Richtung einer Festigkeitserhöhung auswirkt.

Schließlich kann der Stahl auch noch einer dritten Kaltverformung mit einem Verformungsgrad bis 12% unterworfen werden, bei der aus dem Runddraht ein Draht mit rechteckigen Querschnitt hergestellt wird, um die Korngröße auf unter 15 μm zu drücken.

Unabhängig von der Zahl der Verformungsstufen sollte der Stahl bei niedriger Temperatur, vorzugsweise bei 100 bis 400°C, besser noch bei höchstens 300°C ausgelagert werden, um die Zugfestigkeit weiter zu steigern.

Dieses Auslagern bei sehr niedriger Temperatur geschieht vorzugsweise unter Einwirkung einer Spannung und/oder einer Flächenpressung von 20 bis 100 N/mm$^2$ und dient zum Abbau etwaiger innerer Spannungen, insbesondere Querspannungen.

Der Stahl eignet sich insbesondere als Werkstoff zum Herstellen von Blattfedern, Federschienen für Scheibenwischer, Rietlamellen für Textilmaschinen, Ölabstreifringe für Verbrennungsmotoren sowie Dichtungslamellen für hydraulische Anlagen. Wegen seines geringen Nickelgehaltes ist der Stahl zudem sehr gut hautverträglich und eignet sich daher auch als Werkstoff für Armbandverschlüsse, Armbänder und Gebrauchsgegenstände mit niedriger Nickel-Abgaberate entsprechend der EU-Richtlinie 94/27 EG vom 30. Juni 1994 (vgl. ABl. L 188/1), die eine Abgaberate unter 0,5 μg/cm$^2$/Woche vorschreibt, während die Nickel-Abgaberate bei einem herkömmlichen 18/8 Chrom-Nickel-Stahl bis 100 μg/cm$^2$/Woche erreichen kann.

Der erfindungsgemäße Stahl besitzt eine Korrosionsbeständigkeit und Federeigenschaften, die gemessen an der Zugfestigkeit das Niveau hoch legierter austerritischer Stähle wie X5CrNiMo18,10 erreicht.

Der Stahl besitzt ein ferritisches Gefüge mit Niob- und/oder Vanadium Karbiden bzw. -Niobkarbiden; er ist jedoch aufgrund seines Titangehaltes unter 0,01%, vorzugsweise unter 0,006% frei von titanhaitigen Ausscheidungen. Versuche haben nämlich ergeben, daß die Titankarbide beim Lösungsglühen erhalten bleiben und nicht in Lösung gehen. Insofern verhalten sich die Titankarbide anders als die in Lösung gehenden Karbide des Vanadiums und des Niobs. Außerdem verursachen die Titankarbide versprödend wirkendene Komgrenzenausscheidungen bei hohen Glühtemperaturen, weswegen der Titangehalt unter 0,01%, vorzugsweise unter 0,006% besser noch unter 0,004% liegen sollte.

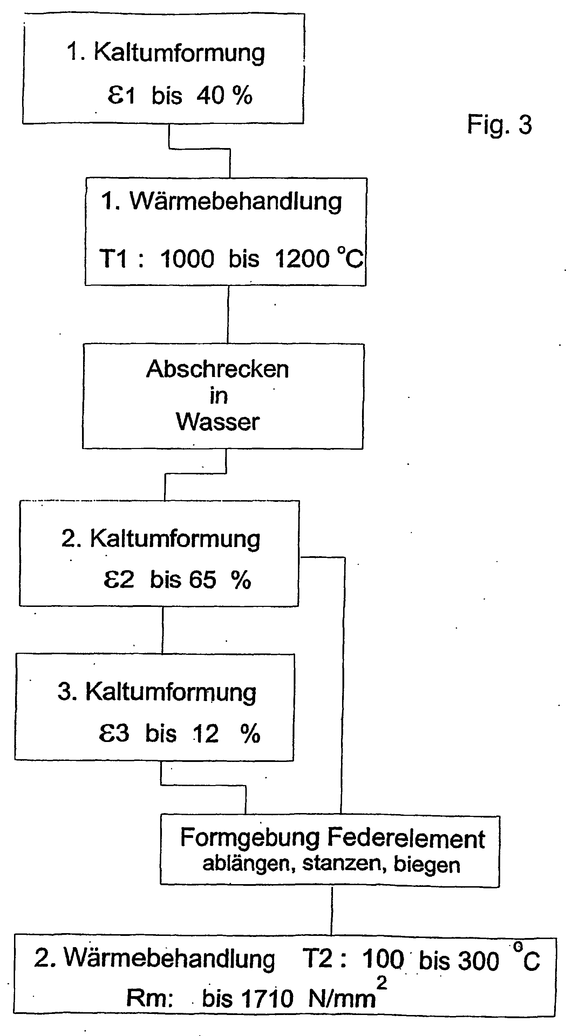

Die Erfindung ist in dem Blockdiagramm der Fig. 3 beispielhaft dargestellt; sie wird nachfolgend anhand von Vergleichsversuchen des näheren erläutert.

*Beispiel 1*

Ein Runddraht aus dem Stahl A1 gemäß Tabelle I mit einem Durchmesser $d_0$ wurde mittels angetriebener Hartmetallscheiben auf einen Durchmesser d heruntergewalzt. Der Verformungsgrad wurde für jeden Versuch als relative Abmessungsänderung ε nach der Formel

$$\varepsilon = 100 \cdot \Delta d/d_0$$

aus der Querschnittsdifferenz $\Delta d = d_0 - d$ errechnet.

Bei jeder Versuchsreihe wurde die Anstellung der Hartmetallscheiben in Richtung einer zunehmenden Querschnittsabnahme solange verändert, bis Oberflächenfehler, insbesondere Oberflächenrisse auftraten oder die Anstellkräfte bzw. die auf die Hartmetallscheiben wirkenden Walzkräfte ein vorgegebenes Grenzmaß erreichten.

Die Verformungsgrade sind in der Tabelle II zusammengestellt; darin bezeichnen $\varepsilon_1$, $\varepsilon_2$ und $\varepsilon_3$ die Verformungsgrade des ersten, zweiten und des dritten Kaltverformens.

Der mit dem Verformungsgrad $\varepsilon_1$ kaltverformte Runddraht wurde in einem Durchlauf-Glühofen unter Schutzgas mit einem Taupunkt unter -65°C auf die aus der Tabelle II ersichtliche Temperatur T1 erhitzt. Nach dem Verlassen der Heizzone des Ofens wurde der lösungsgeglühte Runddraht zur Vermeidung einer Oxidation mit kaltem Schutzgas umspült und alsdann mit Wasser abgeschreckt sowie an Luft getrocknet.

Bei einer abschließenden Wärmebehandlung im Anschluß an ein Kaltver formen wurde der Runddraht aus dem Stahl A1 im Durchlaufverfahren in einem Ofen schlußgeglüht, der an der Einlauf- und der Auslaufseite jeweils mit angetriebenen Rollen versehen war. Der Runddraht konnte so unter Zugspannung in einem Heizrohr mit Hilfe von Infrarotstrahlen bei den aus der Tabelle II ersichtlichen Temperaturen T2 erwärmt werden. Die Drehzahlen der angetriebenen Rollen wurden während des Erwärmens so geregelt, daß der Runddraht unter einer Zugspannung von 20 N/mm$^2$ stand und sich aus der Ziehgeschwindigkeit eine Wärmebehandlung von 35 min ergab.

Der in dieser weise wärmebehandelte Runddraht wurde zu Federelementen verarbeitet. Bei einer Untersuchung ergab sich, daß die Federeigenschaften nur wenig streuten.

*Beispiel 2*

Zum Herstellen von Kompressions- und/oder Ölabstreifringen bzw. Kolbenringen für Verbrennungsmotoren wurde ein Runddraht aus dem Stahl A2 gemäß Tabelle I zunächst mit einem Verformungsgrad von $\varepsilon_1 = 23\%$ zu einem Flachdraht mit quadratischem Querschnitt umgeformt. Der Flachdraht wurde sodann unter Schutzgas im Durchlaufverfahren in einem Wärmeofen auf 1065°C erwärmt und anschließend in Wasser abgeschreckt. Nach einem Zwischentrocknen wurde der Draht mit Hilfe einer Kassetten-Walzvorrichtung bei einem Verformungsgrad von $\varepsilon_2 = 43\%$ zu einem Vorprofil umgeformt. Dem schloß sich eine weitere Verformung mit Hilfe eines Ziehsteins mit einem Verformungsgrad von $\varepsilon_3 = 6\%$ zum Herstellen des vorgegebenen Kolbenring-Querschnitts an.

Der fertige Draht besaß eine Zugfestigkeit von 1620 N/mm$^2$ bei einer Restdehnung von 3%.

Die zweite Wärmebehandlung (Schlußerwärmen) ist nicht zwingend erforderlich, weil beispielsweise Kolbenringe mit einer geringen Ovalität von bis zu wenigen $\mu$m im eingebauten Zustand infolge ihrer Ovalität unter Formzwang bzw. mechanischen Spannungen stehen, die jedoch nach Inbetriebnahme des Motors infolge der entstehenden Verbrennungswärme rasch abgebaut werden.

Den erfindungsgemäßen Stählen A1 bis A3 in Tabelle I sind zwei herkömmliche Chromstähle B1 und B2 mit einer Zusammensetzung gegenübergestellt, aufgrund derer der Kohlenstoff durch Titan als Titankarbid stabil abgebunden war. Die Daten der Tabelle II zeigen, daß bei diesen Vergleichsstählen die aus der Fachliteratur bei ferritischen Chrom-Stählen maximal zulässige Glühtemperatur von 800°C nicht überschritten werden darf, weil es sonst zu Korngrenzenversprödungen kommt, die eine anschließende Kaltverformung außerordentlich erschweren oder auch unmöglich machen. Die erfindungsgemäßen Chrom-Stähle lassen sich hingegen, wie die Daten der Versuchsstähle A1 bis A3 zeigen, bei erheblich höheren Temperaturen glühen und besitzen danach eine bessere Kaltverformbarkeit und insbesondere ein vorteilhaftes Verhalten beim Niedrigtemperatur-Schlußerwärmen. Dies gilt insbesondere dann, wenn die Gehalte an Titan, Niob und Vanadium und/oder Kohlenstoff und Stickstoff erfindungsgemäß aufeinander abgestimmt sind.

Aus den Daten der Tabelle I ergibt sich, daß die erfindungsgemäßen Stähle A1 bis A3 mit zunehmender Temperatur T1 bei der ersten Wärmebehandlung und einem nachfolgenden Kaltverformen eine Zugfestigkeit (Rm1) bis 1590 N/mm$^2$ erreichen. Bei niedrigeren Temperaturen von beispielsweise 850°C läßt sich auch nach einem Kaltverformen keine wesentliche Festigkeitssteigerung erreichen, wie sich aus den Daten der beiden Versuche 1 und 2 ergibt. Das selbe Verhalten zeigen die Versuche 14 bis 16 für den herkömmlichen Stahl B1. Daraus ergibt sich, daß die Temperatur beim Lösungsglühen über 850°C liegen sollte, sie liegt vorzugsweise bei 1000 bis 1200°C.

Die Daten der Versuche 3 bis 13 mit den erfindungsgemäßen Chrom-Stählen A1 bis A3 machen die Bedeutung einer ausreichend hohen Temperatur bei der ersten Wärmebehandlung in Verbindung mit einer erfindungsgemäßen Kaltverformung deutlich und zeigen darüber hinaus, wie sehr sich die Zugfestigkeit mit Hilfe der zweiten Wärmebehandlung bei einer Temperatur bis 300°C erhöhen läßt. Hierzu zeigt der Versuch 10, daß eine Wärmebehandlung bei 350°C nicht mehr mit einer Festigkeitserhöhung verbunden ist.

Die durch die Daten der Versuche 1 bis 13 belegten hohen Festigkeitswerte der erfindungsgemäßen Stähle lassen sich auf Gefügeausscheidungen zurückführen, zu denen es bei dem erfindungsgemäßen Kaltverformen und Erwärmen kommt (vgl. Fig. 2). Dies gilt insbesondere für das Abschrecken von der hohen Temperatur der ersten Wärmebehandlung (Lösungsglühen). Besonders bemerkenswert ist dabei, daß das Lösungsglühen (bei Temperaturen von 1000° bis 1200°C) bei hohen Temperaturen nicht mit einer Komgrenzenversprödung durch Karbide und/oder Karbonitride verbunden ist.

Die erfindungsgemäßen Verfahrensschritte führen hingegen bei den Vergleichsstählen B1 und B2 zu keiner nennenswerten Verbesserung der Zugfestigkeit, wie die Versuche 14 bis 23 zeigen. Zwar ist nach einer ersten Wärmebehandlung bei 850°C noch ein Kaltverformen mit Verformungsgraden bis 40% möglich (Versuche 15 und 16), jedoch ohne signifikante Festigkeitssteigerung. Bei höheren Glühtemperaturen auf über 1000°C kommt es hingegen zu einer für ferritische Chrom-Stähle typischen Komgrenzenversprödung, die ein anschließendes Kaltverformen unmöglich machen.

Tabelle I

| Leg. Nr. | Erfindung | Cr (%) | Si (%) | Mn (%) | C (%) | N (%) | Ni (%) | Mo (%) | Ti (%) | Nb (%) | V (%) | Cu (%) | B (ppm) |
|---|---|---|---|---|---|---|---|---|---|---|---|---|---|
| A1 | Ja | 16,6 | 0,5 | 0,49 | 0,07 | 0,048 | 0,39 | 0,12 | 0,002 | 0,16 | 0,14 | 0,11 | 3 |
| A2 | Ja | 18,3 | 0,42 | 0,63 | 0,05 | 0,052 | 0,25 | 0,25 | 0,001 | 0,15 | 0,20 | 0,21 | 5 |
| A3 | Ja | 18,7 | 0,46 | 0,63 | 0,035 | 0,038 | 0,21 | 0,32 | 0,001 | 0,17 | 0,10 | 0,31 | 5 |
| B1 | Nein | 18,0 | 0,52 | 0,38 | 0,043 | 0,021 | 0,52 | 0,02 | 0,18 | 0,04 | 0,06 | 0,12 | 15 |
| B2 | Nein | 18,7 | 0,61 | 0,52 | 0,081 | 0,029 | 0,46 | 0,06 | 0,12 | 0,06 | 0,09 | 0,34 | 12 |

Tabelle II

| Leg. Nr. | Vers. Nr. | ε1 (%) | T1 (°C) | ε2 (%) | ε3 (%) | Rm1 (N/mm²) | Verformbarkeit | T2 (°C) | Rm2 (N/mm²) |
|---|---|---|---|---|---|---|---|---|---|
| A1 | 1 | 10 | 850 | 30 | keine | 680 | gut | keine | - |
| A1 | 2 | 10 | 850 | 30 | 15 | 750 | gut | 120 | 745 |
| A1 | 3 | 10 | 1050 | 40 | 15 | 1175 | gut | 120 | 1220 |
| A1 | 4 | 35 | 1050 | 30 | 10 | 1425 | gut | keine | 1485 |
| A1 | 5 | 35 | 1050 | 40 | 10 | 1480 | gut | 120 | 1560 |
| A2 | 6 | 35 | 1050 | 50 | 15 | 1495 | gut | 150 | 1650 |
| A2 | 7 | 35 | 1100 | 50 | 10 | 1540 | gut | 150 | 1695 |
| A3 | 8 | 35 | 1120 | 40 | 15 | 1515 | gut | keine | - |
| A3 | 9 | 35 | 1120 | 50 | 15 | 1535 | gut | 100 | 1620 |
| A3 | 10 | 35 | 1120 | 60 | 15 | 1550 | gut | 150 | 1680 |
| A3 | 11 | 35 | 1120 | 70 | 15 | 1590 | gut | 250 | 1710 |
| A3 | 12 | 35 | 1120 | 70 | 15 | 1590 | gut | 350 | 1490 |
| A3 | 13 | 35 | 1120 | 70 | 15 | 1590 | gut | 450 | 1405 |
| B1 | 14 | 10 | 850 | 15 | 15 | 690 | gut | 150 | 690 |
| B1 | 15 | 25 | 850 | 30 | 15 | 830 | gut | 150 | 835 |
| B1 | 16 | 25 | 850 | 40 | - | 1150 | schlecht | 150 | 1145 |
| B1 | 17 | 25 | 1000 | 10 | - | 990 | schlecht | 150 | 995 |
| B1 | 18 | 35 | 1050 | - | - | - | sehr schlecht | - | - |
| B2 | 19 | 35 | 1000 | 10 | - | 620 | schlecht | 150 | 630 |
| B2 | 20 | 35 | 1000 | 18 | - | 675 | schlecht | 150 | 670 |
| B2 | 21 | 25 | 1050 | - | - | - | schlecht | - | - |
| B2 | 22 | 35 | 1050 | - | - | - | schlecht | - | - |
| B2 | 23 | 25 | 1100 | - | - | - | sehr schlecht | - | - |

EP 1 481 109 B1

**Patentansprüche**

1. Verwendung eines ferritischen Chrom-Stahls mit
   0,03 bis 0,1% Kohlenstoff,
   0,2 bis 0,9% Silizium,
   0,3 bis 1% Mangan,
   13 bis 20% Chrom,
   unter 0,5% Nickel,
   0,1 bis 1,5% Molybdän,
   0,1 bis 0,5% Kupfer,
   0,03 bis 0,05% Stickstoff,
   unter 10 ppm Bor,
   unter 0,01% Titan,
   0,01 bis 0,10% Niob,
   0,02 bis 0,25% Vanadium,
   unter 0,002% Aluminium,
   Rest Eisen
   als Werkstoff für korrosionsbeständige Federelemente.

2. Verwendung eines Chrom-Stahls nach Anspruch 1, der unter 10 ppm Bor und/oder unter 0,002% Aluminium enthält.

3. Verwendung eines Stahls nach Anspruch 1 oder 2, **dadurch gekennzeichnet, daß** die Gehalte an Kohlenstoff und Stickstoff der Bedingung

$$(\%C) / (\%N) = 0{,}8 \text{ bis } 2{,}0$$

   genügen.

4. Verwendung eines Chrom-Stahls nach einem der Ansprüche 1 bis 3, **dadurch gekennzeichnet, daß** die Gehalte an Niob, Vanadium und Titan der Bedingung

$$[(\%Nb) + (\%V)]/10 \, (\%Ti) = 5 \text{ bis } 17$$

   genügt.

5. Verwendung eines Chrom-Stahls nach einem der Ansprüche 1 bis 4 im lösungsgeglühten, kaltverformten und bei niedrigen Temperaturen angelassenen Zustand.

6. Verwendung eines Chrom-Stahls nach einem der Ansprüche 1 bis 5 zum Herstellen von formstabilen und verzugarmen Gegenständen durch Stanzen oder Schneiden.

7. Verwendung eines Chrom-Stahls nach einem der Ansprüche 1 bis 6 als Werkstoff für Blattfedern, Federschienen für Scheibenwischer, Kolbenringe für Verbrennungsmotoren, Dichtungslamellen für hydraulische Anlagen, Rietlamellen sowie für in Hautkontakt kommende Erzeugnisse.

8. Verfahren zur Verbesserung der Federeigenschaften von strangförmigem Gut, bei dem ein ferritischer Chrom-Stahl mit
   0,03 bis 0,1 % Kohlenstoff,
   0,2 bis 0,9% Silizium,
   0,3 bis 1% Mangan,
   13 bis 20% Chrom,
   unter 0,5% Nickel,
   0,1 bis 1,5% Molybdän,
   0,1 bis 0,5% Kupfer,
   0,03 bis 0,05% Stickstoff,

unter 10 ppm Bor,
unter 0,01% Titan,
0,01 bis 0,10% Niob,
0,02 bis 0,25% Vanadium,
unter 0,002% Aluminium,
Rest Eisen
bei einem Verformungsgrad bis 40% kaltverformt, anschließend lösungsgeglüht und abgeschreckt wird.

9. Verfahren nach Anspruch 8, **gekennzeichnet durch** ein Lösungsglühen bei 1000° bis 1200°C.

10. Verfahren nach Anspruch 8 oder 9, **dadurch gekennzeichnet, daß** der lösungsgeglühte Stahl mit einem Verformungsgrad bis 65% kaltverformt wird.

11. Verfahren nach Anspruch 10, **dadurch gekennzeichnet, daß** der kaltverformte Stahl bei einer Temperatur von 100° bis 400°C warm ausgelagert wird.

12. Verfahren nach Anspruch 10 oder 11, **dadurch gekennzeichnet, daß** der Stahl mit einem Verformungsgrad bis 12% auf eine mittlere Korngröße unter 15μm eingestellt wird.

13. Verfahren nach Anspruch 11 oder 12, **gekennzeichnet durch** ein Schlußglühen unter Spannung.

14. Verfahren nach Anspruch 13, **gekennzeichnet durch** eine Zugspannung von 20 bis 100 N/mm$^2$.

## Claims

1. Use of a ferritic chromium steel having
   0.03 to 0.1% carbon,
   0.2 to 0.9% silicon,
   0.3 to 1% manganese,
   13 to 20% chromium,
   less than 0.5% nickel,
   0.1 to 1.5% molybdenum,
   0.1 to 0.5% copper,
   0.03 to 0.05% nitrogen,
   less than 10 ppm of boron,
   less than 0.01% titanium,
   0.01 to 0.10% niobium
   0.02 to 0.25% vanadium,
   less than 0.002% aluminium,
   remainder iron
   as a material for corrosion-resistant elastic elements.

2. Use of a chromium steel according to claim 1, which chromium steel contains less than 10 ppm of boron and/or less than 0.002% aluminium.

3. Use of a steel according to claim 1 or 2, **characterised in that** the contents of carbon and nitrogen satisfy the condition

$$(\%C) / (\%N) = 0.8 \text{ to } 2.0.$$

4. Use of a chromium steel according to one of claims 1 to 3, **characterised in that** the contents of niobium, vanadium and titanium satisfy the condition

$$[(\%Nb) + (\%V)]/10 \, (\%Ti) = 5 \text{ to } 17.$$

5. Use of a chromium steel according to one of claims 1 to 4 in the state where it is solution annealed, cold deformed, and tempered at low temperatures.

6. Use of a chromium steel according to one of claims 1 to 5 for producing shape-retaining, low-deformation objects by stamping or cutting.

7. Use of a chromium steel according to one of claims 1 to 6 as a material for leaf springs, sprung blade rails for windscreen wipers, piston rings for internal combustion engines, sealing washers for hydraulic systems, reed blades for looms, and for products which come into contact with the skin.

8. Method of improving the elastic properties of material in the form of a continuous strand, in which a ferritic chromium steel having
0.03 to 0.1% carbon,
0.2 to 0.9% silicon,
0.3 to 1% manganese,
13 to 20% chromium,
less than 0.5% nickel,
0.1 to 1.5% molybdenum,
0.1 to 0.5% copper,
0.03 to 0.05% nitrogen,
less than 10 ppm of boron,
less than 0.01% titanium,
0.01 to 0.10% niobium
0.02 to 0.25% vanadium,
less than 0.002% aluminium,
remainder iron
is cold deformed with a degree of deformation of up to 40% and is then solution annealed and tempered.

9. Method according to claim 8, **characterised by** solution annealing at 1000° to 1200°C.

10. Method according to claim 8 or 9, **characterised in that** the solution-annealed steel is cold deformed with a degree of deformation of up to 65%.

11. Method according to claim 10, **characterised in that** the cold deformed steel is hot aged at a temperature from 100° to 400°C.

12. Method according to claim 10 or 11, **characterised in that** the steel is set to a mean grain size of less than 15 $\mu$m by a degree of deformation of up to 12%.

13. Method according to claim 11 or 12, **characterised by** final annealing under stress.

14. Method according to claim 13, **characterised by** a tensile stress of from 20 to 100 N/mm$^2$.

**Revendications**

1. Utilisation d'un acier ferritique au chrome comportant
0,03 à 0,1 % de carbone,
0,2 à 0,9 % de silicium,
0,3 à 1 % de manganèse,
13 à 20 % de chrome,
moins de 0,5 % de nickel,
0,1 à 1,5 % de molybdène,
0,1 à 0,5 % de cuivre,
0,03 à 0,05 % d'azote,
moins de 10 ppm de bore,
moins de 0,01 % de titane,
0,01 à 0,10 % de niobium,

0,02 à 0,25 % de vanadium,
moins de 0,002 % d'aluminium,
le reste étant du fer
en tant que matériau pour éléments ressorts résistant à la corrosion.

2. Utilisation d'un acier au chrome selon la revendication 1, qui contient moins de 10 ppm de bore et/ou moins de 0,002 % d'aluminium.

3. Utilisation d'un acier selon la revendication 1 ou 2, **caractérisé en ce que** les teneurs en carbone et en azote satisfont à la condition

$$(\% \ C) / (\% \ N) = 0,8 \ à \ 2,0.$$

4. Utilisation d'un acier au chrome selon l'une des revendications 1 à 3, **caractérisée en ce que** les teneurs en niobium, en vanadium et en titane satisfont à la condition

$$[(\% \ Nb) + (\% \ V)] / 10 \ (\% \ Ti) = 5 \ à \ 17.$$

5. Utilisation d'un acier au chrome selon l'une des revendications 1 à 4 à l'état de recuit de mise en solution, déformé à froid et revenu à de basses températures.

6. Utilisation d'un acier au chrome selon l'une des revendications 1 à 5 pour fabriquer des objets de forme stable ayant un faible gauchissement par estampage ou découpage.

7. Utilisation d'un acier au chrome selon l'une des revendications 1 à 6 en tant que matériau pour ressorts à lames, lames d'aiguilles flexibles pour essuie-glace, segments de pistons pour moteurs à combustion interne, lames d'étanchéité pour installations hydrauliques, lames de peigne, ainsi que pour des produits venant au contact de la peau.

8. Procédé d'amélioration des propriétés élastiques de produits en forme de billettes, dans lequel on déforme à froid un acier ferritique au chrome comportant
0,03 à 0,1 % de carbone,
0,2 à 0,9 % de silicium,
0,3 à 1 % de manganèse,
13 à 20 % de chrome,
moins de 0,5 % de nickel,
0,1 à 1,5 % de molybdène,
0,1 à 0,5 % de cuivre,
0,03 à 0,05 % d'azote,
moins de 10 ppm de bore,
moins de 0,01 % de titane,
0,01 à 0,10 % de niobium,
0,02 à 0,25 % de vanadium,
moins de 0,002 % d'aluminium,
le reste étant du fer
avec un degré de déformation allant jusqu'à 40%, puis on effectue un recuit de mise en solution et on refroidit brusquement.

9. Procédé selon la revendication 8, **caractérisé par** un recuit de mise en solution à une température comprise entre 1 000 °C et 1 200 °C.

10. Procédé selon la revendication 8 ou 9, **caractérisé en ce que** l'acier recuit par mise en solution est déformé à froid avec un degré de déformation allant jusqu'à 65 %.

11. Procédé selon la revendication 10, **caractérisé en ce que** l'acier déformé à froid est durci par précipitation à chaud à une température comprise entre 100 °C et 400 °C.

12. Procédé selon la revendication 10 ou 11, **caractérisé en ce que** l'acier avec un degré de déformation allant jusqu'à 12 % est ajusté à une taille moyenne de grain inférieure à 15 µm.

13. Procédé selon la revendication 11 ou 12, **caractérisé par** un recuit final sous tension.

14. Procédé selon la revendication 13, **caractérisé par** une contrainte de traction comprise entre 20 et 100 N/mm$^2$.

## Fig. 1

**Fig. 2**

Fig. 3

```
┌─────────────────────────┐
│   1. Kaltumformung      │
│                         │
│   Ɛ1  bis  40 %         │
└─────────────────────────┘
             │
┌─────────────────────────┐
│   1. Wärmebehandlung    │
│                         │
│ T1 :  1000  bis  1200 °C│
└─────────────────────────┘
             │
┌─────────────────────────┐
│      Abschrecken        │
│          in             │
│        Wasser           │
└─────────────────────────┘
             │
┌─────────────────────────┐
│   2. Kaltumformung      │
│                         │
│   Ɛ2  bis 65 %          │
└─────────────────────────┘
             │
┌─────────────────────────┐
│   3. Kaltumformung      │
│                         │
│   Ɛ3  bis  12  %        │
└─────────────────────────┘
             │
┌─────────────────────────────┐
│ Formgebung Federelement     │
│ ablängen, stanzen, biegen   │
└─────────────────────────────┘
             │
┌──────────────────────────────────────────┐
│ 2. Wärmebehandlung   T2 :  100  bis 300 °C│
│          Rm:  bis 1710  N/mm²             │
└──────────────────────────────────────────┘
```